# EUROPÄISCHE PATENTSCHRIFT

(11) **EP 1 763 995 B1**
(45) Veröffentlichungstag und Bekanntmachung des Hinweises auf die Patenterteilung: **07.11.2007**
(21) Anmeldenummer: 05020452.8
(22) Anmeldetag: 20.09.2005
(51) Int. Cl.: A01K 61/00

(54) **Vorrichtung und Verfahren zur Selektierung von in Wasser lebenden Tieren in einer Aufzuchtanlage**
Device and method for grading aquatic animals in a rearing unit
Dispositif et méthode de calibrage d'animaux aquatiques dans une installation d'élevage

(43) Veröffentlichungstag der Anmeldung: 21.03.2007
(73) Patentinhaber: Krautwedel, Volker, 21244 Buchholz (DE)
(72) Erfinder: Krautwedel, Volker, 21244 Buchholz (DE)
(74) Vertreter: Schupfner, Georg

(56) Entgegenhaltungen:
- WO-A-03/094608
- DE-U1- 8 605 102
- GB-A- 2 016 882

## Beschreibung

Die Erfindung betrifft eine Vorrichtung und ein Verfahren zur Selektierung von in Wasser lebenden Tieren in ein Aufzuchtbecken aufweisenden Aufzuchtanlagen, die einen ersten Vorrichtungsteil und einen mit dem ersten Vorrichtungsteil in Wirkverbindung stehenden zweiten Vorrichtungsteil aufweisen, wobei es sich bei dem ersten Vorrichtungsteil um ein Selektionselement und bei dem zweiten Vorrichtungsteil um ein Austreibelement handelt.

Eine Vorrichtung dieser Art ist bekannt (GB-A-2 016 882). Die bekannte Vorrichtung weist eine Mehrzahl radialsymmetrischer, konzentrischer Becken bzw. Compartments auf, bei der die Fische aus dem äußeren Compartment per Hand entfernt werden müssen. Die Entfernung der Fische aus dem äußeren Compartment muß dann erfolgen, wenn ein Selektionselement eine Endstellung erreicht hat. Das Entfernen der Fische muß dann per Hand durch Bedienungspersonen mit Keschern oder aber mit kescherähnlichen Vorrichtungen, die Teil der bekannten Vorrichtung sind, ausgeführt werden. Dabei werden die Fische zumindest beim Herausholen aus dem äußeren Compartment der Luft ausgesetzt und erleiden einen unbedingt zu vermeidenden Streß, da der Streß einen negativen Einfluß auf das Verhalten der Fische untereinander und einen negativen Einfluß im Hinblick auf das Wachstumsverhalten der Fische hat.

Derartige Lebewesen werden in Aquakulturanlagen großgezogen, in denen sich u.a. Aufzuchtbecken befinden. In den Becken werden die Tiere, bspw. Fische oder Schalentiere, gehalten und mit dem zum Wachstum notwendigen, also Futter, Sauerstoff und entsprechend auf die Tierart abgestimmtem Wasser versorgt.

Da die Tiere später als Lebensmittel möglichst hoher Qualität in den Verkauf gebracht werden sollen, ist es notwendig, eine artgerechte und gesunde Haltung zu erreichen. Insbesondere Streß ist für die Tiere zu vermeiden. Streß bewirkt Gewichtsverlust während der Aufzucht, instabile Gesundheit der Bestände und führt insbesondere beim Schlachtvorgang zu erhöhten Energieverbrauch, was zu einem verstärkten pH-Wert-Abfall im Tier führt, eine verfrühte Totenstarre, die u.a. eine Auflösung der Fleischstrukturen, insbesondere der Filetstrukturen bewirken kann, ein Verblassen der Fleischfarbe, geringes Wasserbindungsvermögen, geringe Festigkeit und erhöhte Gar- und Räucherverluste.

Ein Faktor, durch den Streß entsteht, ist die Tatsache, daß insbesondere bei Raubfischen, Kannibalismus unter den Tieren entstehen kann, wenn Tiere unterschiedlicher Größe innerhalb desselben Beckens in direktem Kontakt miteinander stehen. Bei Raubfischen ist es Stand der Technik, den Fisch mindestens zweimal während der Aufzucht dem Wasser zu entnehmen und zu sortieren. Dieses geschieht entweder per Hand durch Keschern oder mit sog. Fischpumpen in Form von Abpumpen der Tiere in Verbindung mit Sortiermaschinen oder einem Sortieren per Hand. Insbesondere das Sortieren bewirkt bei den Tieren einen sehr großen Streß, da die Tiere sich während der Sortierung an der Luft befinden.

Es ist Aufgabe der vorliegenden Erfindung, eine Vorrichtung und ein Verfahren bereitzustellen, mit dem der Streß beim Sortieren der Tiere zu reduzieren ist.

Hinsichtlich der Vorrichtung wird die erfindungsgemäße Aufgabe dadurch gelöst, daß das Selektionselement innerhalb eines Aufzuchtbeckens aufstellbar und entfernbar ist und das Austreibelement antreibbar und im Aufzuchtbecken in Richtung des Selektionselementes bewegbar ist.

Auf diese Weise kann eine Selektion durchgeführt werden, mit der die Tiere nicht ihrem angestammten Medium entnommen werden müssen und auch nicht durch Personen oder Maschinen außerhalb des Mediums selektiert werden müssen. Statt dessen können die kleineren Tiere durch das Selektionselement hindurchtreten zu dem sie durch das Austreibelement geführt werden. Die verbleibenden größeren Tieren können aus dem Bereich ausgeschleust werden.

Eine vorteilhafte Ausgestaltung der Erfindung sieht vor, daß das Selektionselement eine bündig mit dem Aufzuchtbecken abschließende Form aufweist. Dadurch wird gewährleistet, daß eine optimale Abdichtung der Bereiche und damit eine optimale Selektion herbeigeführt wird.

Eine weitere vorteilhafte Ausgestaltung der Erfindung sieht vor, daß das Selektionselement einen Rahmenaufbau aufweist. Auf diese Weise läßt sich eine einfache und stabile Konstruktion für das Selektionselement bereitstellen.

Des weiteren ist vorteilhaft, daß das Selektionselement mit Öffnungen zur Selektion der Tiere der Größe nach versehen ist. Besonders vorteilhaft ist dabei, wenn die Öffnungen durch beabstandete Stäbe erzeugt werden. Durch derartige Öffnungen lassen sich gezielt die jeweiligen gewünschten Trenngrößen einstellen, um ein optimales Selektionsergebnis in Abhängigkeit des Wachstumsgrades der Tiere zu erreichen. Dieses läßt sich besonders vorteilhaft dadurch erreichen, daß es sich bei dem Selektionselement um ein Stellgitter handelt.

Eine weitere vorteilhafte Ausführungsform der Erfindung sieht vor, daß das Austreibelement eine bündig mit dem Aufzuchtbecken abschließende Form aufweist. Hierdurch wird gewährleistet, daß die sich vor dem Austreibelement befindlichen Tiere keine Möglichkeit haben, hinter das Austreibelement zu gelangen, wodurch eine optimale Selektion herbeigeführt werden kann. Des weiteren ist vorteilhaft, daß das Austreibelement ein flächiges Element darstellt, welches bevorzugt plattenförmig ist, wobei das flächige Element bevorzugt auf einen Rahmen montiert wird, der zusammen mit dem flächigen Element die notwendigen Maschinenteile wie Antriebe und dergl. trägt. Vorteilhaft ist dabei, wenn das flächige Element Öffnungen aufweist, die kleiner gleich der Öffnung des Selektionselements sind. Durch diese Öffnungen wird durch das flächige Element kein Wasserstau verursacht und bei Annäherung der Öffnungsgröße an die Trenngröße des Selektionselementes können Tiere unterhalb der Selektionstrenngröße auch durch das Austreibelement hindurch einer Selektion zugeführt werden.

Eine weitere vorteilhafte Ausführungsform der Erfindung sieht vor, daß das Austreibelement mit einem Mittel zur Reinigung des Aufzuchtbeckens versehen ist. Dieses ist insofern vorteilhaft, da während des Austeibens der Tiere gleichzeitig eine Reinigung des Beckens vorgenommen werden kann.

Des weiteren ist vorteilhaft, wenn das Austreibelement ein Ausrichtelement aufweist, das bevorzugt aus einem Gestänge besteht, an dessen Ende nachgeführt eine Rolle zur Stützung des Austreibelementes befestigt ist. Auch ist es vorteilhaft, wenn das Austreibelement mit mindestens einem Stabilisator zum Ausrichten des Austreibelements in bezug auf das Aufzuchtbecken versehen ist. Durch das Ausricht- und das Stabilisationselement kann gewährleistet werden, daß das Austreibelement sich optimal im Aufzuchtbecken während des Austreibens anordnet.

Des weiteren ist vorteilhaft, daß das Austreibelement mit mindestens einem Antrieb zum Erzeugen des Vortriebs, besonders bevorzugt auch in Vorwärts- und Rückwärtsrichtung versehen ist. Zusätzlich können auch zwei Antriebe vorgesehen sein. Vorteilhafterweise handelt es sich bei den vorgesehenen Antrieben um Elektromotoren mit Rückstoßwirkung. Vorteilhaft ist des weiteren, daß der Stabilisator einen Stabilisatorarm, eine Rolle und/oder ein Spannungselement aufweist, wobei das Spannungselement ein aktives oder passives federndes Element bzw. Zylinder sein kann, insbesondere Druckstäbe.

Die erfindungsgemäße Aufgabe wird hinsichtlich des Verfahrens dadurch gelöst, daß das Verfahren die Verfahrensschritte aufweist:
Aufstellen eines Selektionselements nach einem der Ansprüche 1 bis 5 in dem Aufzuchtbecken,
Einsetzen eines Austreibelements nach einem der Ansprüche 1 bis 13 in das Aufzuchtbecken,
Fortbewegen des Austreibelementes in Richtung des Selektionselementes zur Verkleinerung des Aufenthaltsraumes der Tiere im Aufzuchtbecken und
Entfernen des Selektionselementes nach erfolgter Überführung der Tiere.

Vorteilhafterweise erfolgt das Fortbewegen des Austreibelements über ein an dem Austreibelement befindlichen Antrieb.

Nachfolgend wird die Erfindung anhand eines Ausführungsbeispieles mit begleitenden Zeichnungen dargestellt. Dabei zeigt
- Fig. 1: eine Draufsicht auf ein Aufzuchtbecken mit eingesetzter erfindungsgemäßer Vorrichtung,
- Fig. 2: eine Seitenansicht eines erfindungsgemäßen Austreibelements,
- Fig. 3: eine Draufsicht auf ein erfindungsgemäßes Austreibelement und
- Fig. 4: eine Seitenansicht eines erfindungsgemäßen Selektionselementes.

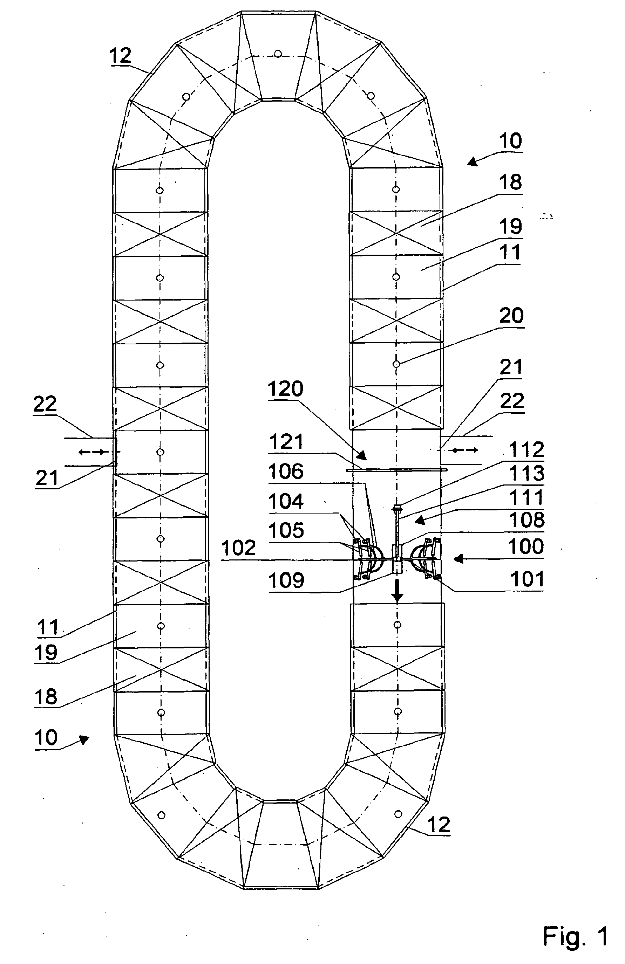

Fig. 1 zeigt in Draufsicht ein Aufzuchtbecken als in sich geschlossenes Rinnensystem 10, welches aus geraden Rinnenelementen 11 und Kurvenrinnenelementen 12 besteht. Das Rinnensystem weist zwei Verbindungsöffnungen 21 auf, über die benachbarte Rinnensysteme 10 über eine Verbindung 22 miteinander verbunden sind. Die Rinnen 11 und 12 sind mit Abdeckungen versehen, die als lichtundurchlässige Abdeckung 18 und als lichtdurchlässige Abdeckung 19 ausgeführt sind. Die lichtdurchlässigen Abdeckungen 19 sind mit Futteröffnungen 20 versehen.

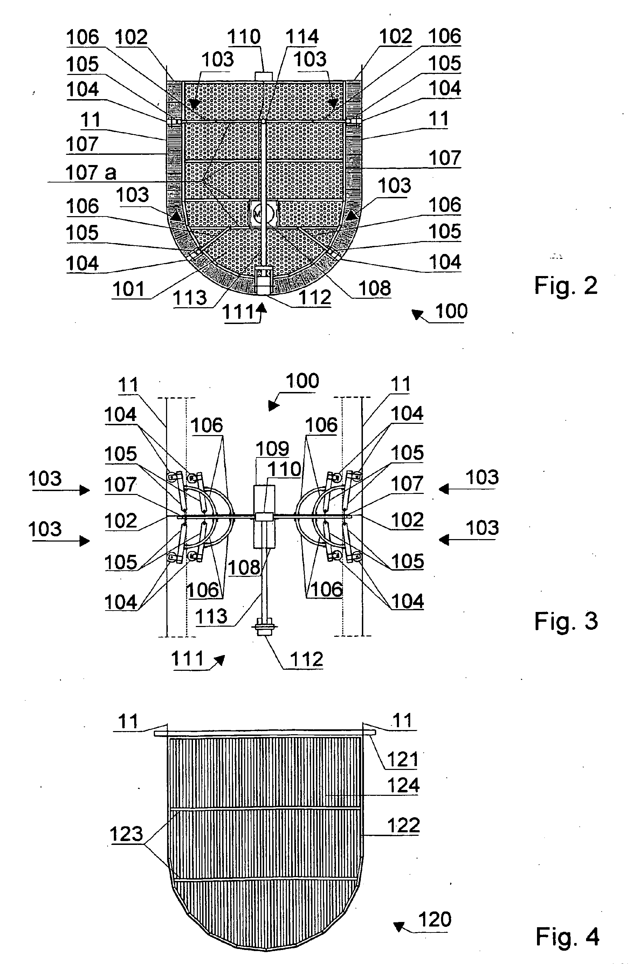

In den Fig. 2 bis 4 ist eine erfindungsgemäß vorteilhafte Lösung dargestellt, wie es in der zuvor beschriebenen Anlage möglich wird, eine Größenselektion der Tiere vorzunehmen, um den Streß für die Tiere bei der Trennung in unterschiedliche Größen zu reduzieren. Da Wassertiere dazu neigen, "auseinanderzuwachsen", kann es zu Kannibalismus unter den Tieren kommen. Dieses ist insbesondere in der Fischaufzucht ein Problem. Hier wird der Fisch, wie zuvor beschrieben, mindestens zweimal während der Aufzucht dem Wasser entnommen und größenmäßig sortiert.

Bei den Rinnensystemen 10 werden zur Größenselektierung in einem Bereich neben der Verbindungsöffnung 21 die Abdeckungen 18, 19 entfernt und mindestens ein Stellgitter 120 aufgestellt. Diese Stellgitter bestehen aus einem Tragwerk 121, an dem ein Rahmen 122 mit festen Querverbindungen 123 befestigt ist. Der Rahmen kann mit Weichstoff wie Moosgummi, Schaumstoff, Gummi und dergl. beschichtet sein. Der Rahmen schließt bündig mit dem Rinnenelement ab und weist dieselbe Form wie das Rinnenelement auf. Durch den Weichstoff wird eine abdichtende Klemmwirkung mit dem Rinnenelement erzielt. Auf diesem Rahmen 122 sind Siebvorrichtungen insbesondere in Form von Gitterstäben 124 vorgesehen, zwischen denen hindurch sich die Tiere bewegen können, die kleiner als ein bestimmter Grenzwert sind, damit diese von den großen Tieren abgetrennt werden können. Es können auch mehrere Stellgitter mit unterschiedlichen Trenngrößen aufgestellt werden.

Um die Selektion zu forcieren, wird ein sog. Austreiber 100 verwendet, der auf der von der Verbindungsöffnung 21 abgewandten Seite des Stellgitters in die Rinne eingesetzt wird (s. Fig. 1), um die Tiere in Richtung des Stellgitters vorzubewegen. Der Austreiber 100 ist mit Motoren 108, 109 versehen, die es ihm ermöglichen sich innerhalb des Rinnensystems fortzubewegen. Der Austreiber selbst besteht aus einem Rahmen 107 mit Querverbindungen 107a und einem Lochblech 101, an dessen äußeren Rand Borsten 102 vorgesehen sind, die entlang der Rinnenoberfläche bürsten und damit einen dichten und kompakten Abschluß gegenüber den Rinnenelementen erreichen. Der Austreiber 100 ist mit Stabilisatoren 103 versehen, die aus einem Tragarm 105 bestehen, an dessen Ende eine Rolle 104 angeordnet ist. Federn oder Zylinder 106, bspw. auch Druckstäbe, drücken die Rollen 104 gegen die Oberfläche der Rinnenelemente und bewirken somit ein Aufrechtstehen des Austreibers 100.

Ein Umkippen des Austreibers wird des weiteren durch einen Zügler 111 verhindert, der mit der Querverbindung 107a über ein Gelenk 114 und ein Gestänge 113 verbunden ist und am Ende des Gestänges 113 eine Rolle 112 aufweist, der sich ebenfalls über den Boden der Rinnenelemente bewegt und aufgrund des Gewichtes gleichzeitig eine Umkippen des Austreibers verhindert. Über eine Muffe 110 und ggf. Kabelhalter werden die Motoren des Austreibers 100 mit Energie versorgt. Der Austreiber bewegt sich innerhalb des Rinnensystems in Richtung Verbindungsöffnung 21 und bewirkt ein Vorsichherschwimmen der Fische in Richtung des Stellgitters 120 und damit auch der Verbindungsöffnung 21. Die kleineren Tiere schlüpfen dabei durch die Zwischenräume zwischen den Gitterstäben 124 des Stellgitters 120, während die Tiere, die größer als dieser Zwischenraum sind, am Stellgitter zurückgehalten werden.

Sobald eine möglichst große "Verdichtung" der Tiere im Bereich zwischen Stellgitter und Austreiber erreicht wird, wird die Verbindungsöffnung geöffnet und die Tiere, die größer als die Abstände zwischen den Gitterstäben 124 des Stellgitters 120 sind, bewegen sich durch die Verbindung 22 in das nächste Rinnensystem 10, bis sämtliche Tiere den Bereich zwischen Stellgitter und Austreiber verlassen haben. Unterstützt werden kann die Überführung der größeren Tiere durch eine Erhöhung der Sauerstoffkonzentration im nächsten Rinnensystem, was die Überführung der Tiere erleichtert. Nachdem die Überführung stattgefunden hat, wird die Verschlußöffnung 21 geschlossen, das Stellgitter 120 entfernt und der Austreiber 100 rückwärtig durch das Rinnensystem geführt, um die im Rinnensystem befindlichen Kabel wieder an den Ausgangspunkt zurückzuführen. Gleichzeitig während des Vor- und Rückbewegens des Austreibers 100 findet über die Borsten 102 eine Reinigung der Rinnenwände statt, so daß in regelmäßigen Abständen eine mechanische Reinigung der Oberfläche der Rinnen durchgeführt wird. Nach Rückführung des Austreibers zum Ausgangspunkt wird dieser ebenfalls entfernt und das Rinnensystem wird wieder für die Aufzucht vorbereitet, bevor von dem nächst rückwärtigen Rinnensystem die für dieses Becken zu groß gewordenen Fische in das gerade entleerte Becken überführt werden.

### Bezugszeichenliste

- 10: Rinnensystem
- 11: gerades Rinnenelement
- 12: Kurvenrinnenelement
- 18: Abdeckung, lichtundurchlässig
- 19: Abdeckung, lichtdurchlässig
- 20: Futteröffnung
- 21: Verbindungsöffnung
- 22: Verbindung
- 100: Austreiber
- 101: Lochblech
- 102: Borsten
- 103: Stabilisator
- 104: Rolle
- 105: Tragarm
- 106: Feder / Druckstab
- 107: Rahmen
- 107a: Querverbindung
- 108: Antrieb
- 109: Antrieb
- 110: Anschlußmuffe
- 111: Zügler
- 112: Rolle
- 113: Gestänge
- 114: Gelenk
- 120: Stellgitter
- 121: Tragwerk
- 122: Rahmen mit Weichstoff
- 123: Querverbindung
- 124: Gitterstab

## Patentansprüche

1. Vorrichtung zur Selektierung von in Wasser lebenden Tieren in ein Aufzuchtbecken aufweisenden Aufzuchtanlagen, die einen ersten Vorrichtungsteil und einen mit dem ersten Vorrichtungsteil in Wirkverbindung stehenden zweiten Vorrichtungsteil aufweisen, wobei es sich bei dem ersten Vorrichtungsteil um ein Selektionselement und bei dem zweiten Vorrichtungsteil um ein Austreibelement (100) handelt, **dadurch gekennzeichnet, daß** das Selektionselement innerhalb eines Aufzuchtbeckens aufstellbar und entfernbar ist, und das Austreibelement (100) antreibbar und im Aufzuchtbecken in Richtung des Selektionselementes bewegbar ist.

2. Vorrichtung nach Anspruch 1, **dadurch gekennzeichnet, daß** das Selektionselement eine bündig mit dem Aufzuchtbecken abschließende Form aufweist.

3. Vorrichtung nach Anspruch 1 oder 2, **dadurch gekennzeichnet, daß** das Selektionselement mit Öffnungen zur Selektion der Tiere der Größe nach versehen ist.

4. Vorrichtung nach Anspruch 3, **dadurch gekennzeichnet, daß** die Öffnungen durch beabstandete Stäbe (124) erzeugt werden.

5. Vorrichtung nach einem der Ansprüche 1 bis 4, **dadurch gekennzeichnet, daß** es sich bei dem Selektionselement um ein Stellgitter (120) handelt.

6. Vorrichtung nach einem der Ansprüche 1 bis 5, **dadurch gekennzeichnet, daß** das Austreibelement (100) eine bündig mit dem Aufzuchtbecken abschließende Form aufweist.

7. Vorrichtung nach einem der Ansprüche 1 bis 6, **dadurch gekennzeichnet, daß** das Austreibelement (100) ein flächiges Element, bevorzugt plattenförmig, aufweist.

8. Vorrichtung nach Anspruch 7, **dadurch gekennzeichnet, daß** das flächige Element Öffnungen (20) aufweist, die kleiner als die Öffnungen des Selektionselements sind.

9. Vorrichtung nach einem der Ansprüche 1 bis 8, **dadurch gekennzeichnet, daß** das Austreibelement (100) mit einem Mittel zur Reinigung des Aufzuchtbeckens versehen ist.

10. Vorrichtung nach einem der Ansprüche 1 bis 9, **dadurch gekennzeichnet, daß** das Austreibelement (100) ein Ausrichtelement aufweist, bevorzugt bestehend aus einem Gestänge (113) und/oder einer nachgeführten Rolle (112).

11. Vorrichtung nach einem der Ansprüche 1 bis 10, **dadurch gekennzeichnet, daß** das Austreibelement (100) mit mindestens einem Antrieb (108, 109) zum Erzeugen des Vortriebs, bevorzugt in Vorwärts- und Rückwärtsrichtung, versehen ist.

12. Vorrichtung nach einem der Ansprüche 1 bis 11, **dadurch gekennzeichnet, daß** das Austreibelement (100) mit mindestens einem Stabilisator (103) zum Ausrichten des Austreibelements (100) in bezug auf das Aufzuchtbecken versehen ist.

13. Vorrichtung nach Anspruch 12, **dadurch gekennzeichnet, daß** der Stabilisator (103) einen Stabilisatorarm, eine Rolle (112) und/oder ein Spannelement aufweist.

14. Verfahren zum Selektieren von in Wasser lebenden Tieren in ein Aufzuchtbecken aufweisenden Aufzuchtanlagen, umfassend die Schritte: Aufstellen eines Selektionselementes nach einem der Ansprüche 1 bis 5 in dem Aufzuchtbecken, Einsetzen eines Austreibelementes (100) nach einem der Ansprüche 1 bis 13 in das Aufzuchtbecken, wodurch ein Raum zwischen Austreibelement (100) und Selektionselement geschaffen wird, in dem sich in Wasser lebende Tiere befinden, Fortbewegen des Austreibelementes (100) in Richtung des Selektionselementes zur Verkleinerung des Aufenthaltsraumes und Entfernen des Selektionselementes nach erfolgter Überführung der Tiere.

15. Verfahren nach Anspruch 14, **dadurch gekennzeichnet, daß** das Fortbewegen des Austreibelements (100) über einen am Austreibelement (100) befindlichen Antrieb erfolgt.

## Claims

1. A device for selecting aquatic animals in rearing plants having a rearing trough, which plants have a first device part and a second device part actively connected to the first device part, wherein the first device part is a selection element and the second device part is an shoot element (100), **characterised in that** the selection element can be installed inside and removed from a rearing trough, and **in that** the shoot element (10) can be driven and moved in the rearing trough in the direction of the selection element.

2. The device according to Claim 1, **characterised in that** the selection element has a form that seals flush with the rearing trough.

3. The device according to Claim 1 or 2, **characterised in that** the selection element is provided with openings for selecting the animals according to size.

4. The device according to Claim 3, **characterised in that** the openings are produced by bars (124) spaced apart.

5. The device according to one of Claims 1 to 4, **characterised in that** the selection element is an adjustable grid (120).

6. The device according to one of Claims 1 to 5, **characterised in that** the shoot element (100) has a form that seals flush with the rearing trough.

7. The device according to Claims 1 to 6, **characterised in that** the shoot element (100) has a planar element, preferably plate-shaped.

8. The device according to Claim 7, **characterised in that** the planar element has openings (20) which are smaller than the openings of the selection element.

9. The device according to one of Claims 1 to 8, **characterised in that** the shoot element 9100) is provided with means for cleaning the rearing trough.

10. The device according to one of claims 1 to 9, **characterised in that** the shoot element (100) has an aligning element, preferably consisting of rods (113) and/or a trailing roll (112).

11. The device according to one of Claims 1 to 10, **characterised in that** the shoot element (100) is provided with at least one drive (108, 109) for generating the forward drive, preferably in the forwards and backwards direction.

12. The device according to one of Claims 1 to 11, **characterised in that** the shoot element (100) is provided with at least one stabiliser (103) for aligning the shoot element (100) in relation to the rearing trough.

13. The device according to Claim 12, **characterised in that** the stabiliser (103) has a stabiliser arm, a roll (112) and/or a clamping element.

14. A method for selecting aquatic animals in rearing plants having a rearing trough, comprising the steps: erection of a selection element according to one of Claims 1 to 5 in the rearing trough, insertion of a shoot element (100) according to one of Claims 1 to 13 in the rearing trough, thereby creating a space between the shoot element (100) and the selection element in which aquatic animals are present, moving the shoot element (10) in the direction of the selection element for reducing the holding room and removing the selection element after the animals have been transferred.

15. The method according to Claim 14, **characterised in that** the movement of the shoot element (100) is effected by means of a drive provided on the shoot element (100).

## Revendications

1. Dispositif pour le calibrage d'animaux aquatiques dans des installations d'élevage présentant un bassin d'élevage, qui présentent une première partie de dispositif et une deuxième partie de dispositif en liaison active avec la première partie de dispositif, la première partie de dispositif étant un élément de sélection et la deuxième partie de dispositif étant un élément d'expulsion (100), **caractérisé en ce que** l'élément de sélection peut être installé à l'intérieur d'un bassin d'élevage et en être retiré et l'élément d'expulsion (100) peut être entraîné et déplacé, dans le bassin d'élevage, en direction de l'élément de sélection.

2. Dispositif selon la revendication 1, **caractérisé en ce que** l'élément de sélection a une forme affleurante au bassin d'élevage.

3. Dispositif selon la revendication 1 ou 2, **caractérisé en ce que** l'élément de sélection est pourvu d'ouvertures pour sélectionner les animaux selon leur taille.

4. Dispositif selon la revendication 3, **caractérisé en ce que** les ouvertures sont produites par des barres (124) distantes l'une de l'autre.

5. Dispositif selon l'une quelconque des revendications 1 à 4, **caractérisé en ce que** l'élément de sélection est une grille de réglage (120).

6. Dispositif selon l'une quelconque des revendications 1 à 5, **caractérisé en ce que** l'élément d'expulsion (100) a une forme affleurante au bassin d'élevage.

7. Dispositif selon l'une quelconque des revendications 1 à 6, **caractérisé en ce que** l'élément d'expulsion (100) présente un élément plat, de préférence en forme de plaque.

8. Dispositif selon la revendication 7, **caractérisé en ce que** l'élément plat présente des ouvertures (20) qui sont plus petites que les ouvertures de l'élément de sélection.

9. Dispositif selon l'une quelconque des revendications 1 à 8, **caractérisé en ce que** l'élément d'expulsion (100) est pourvu d'un moyen pour nettoyer le bassin d'élevage.

10. Dispositif selon l'une quelconque des revendications 1 à 9, **caractérisé en ce que** l'élément d'expulsion (100) présente un élément d'orientation constitué, de préférence, d'une tringle (113) et/ou d'un rouleau entraîné (112).

11. Dispositif selon l'une quelconque des revendications 1 à 10, **caractérisé en ce que** l'élément d'expulsion (100) est pourvu d'au moins un entraînement (108, 109) pour la production de la poussée, de préférence dans le sens avant et arrière.

12. Dispositif selon l'une quelconque des revendications 1 à 11, **caractérisé en ce que** l'élément d'expulsion (100) est pourvu d'au moins un stabilisateur (103) pour l'orientation de l'élément d'expulsion (100) par rapport au bassin d'élevage.

13. Dispositif selon la revendication 12, **caractérisé en ce que** le stabilisateur (103) présente un bras de stabilisation, un rouleau (112) et/ou un élément de serrage.

14. Procédé pour le calibrage d'animaux aquatiques dans des installations d'élevage présentant un bassin d'élevage, comprenant les étapes suivantes : mise en place d'un élément de sélection selon l'une quelconque des revendications 1 à 5 dans le bassin d'élevage, pose d'un élément d'expulsion (100) selon l'une quelconque des revendication 1 à 13 dans le bassin d'élevage, moyennant quoi un espace, dans lequel se trouvent des animaux aquatiques, est créé entre l'élément d'expulsion (100) et l'élément de sélection, déplacement de l'élément d'expulsion (100) en direction de l'élément de sélection pour réduire l'espace de séjour et retrait de l'élément de sélection une fois le transfert des animaux terminé.

15. Procédé selon la revendication 14, **caractérisé en ce que** le déplacement de l'élément d'expulsion (100) est assuré par un entraînement se trouvant sur l'élément d'expulsion (100).
